# EUROPÄISCHE PATENTANMELDUNG

(11) **EP 0 666 208 A1**
(43) Veröffentlichungstag der Anmeldung: **09.08.1995**
(21) Anmeldenummer: 95101093.3
(22) Anmeldetag: 27.01.1995
(51) Int. Cl.: B62B 5/04, G05G 7/04

(54) **Transportwagen, insbesondere Rollbehälter, mit einziehbaren Stützbeinen**

(30) Priorität: 05.02.1994 DE 4403659
(71) Anmelder: MCE Marketing-Consulting-Engineering GmbH, D-44536 Lünen (DE); Deutsche Post AG, D-53175 Bonn - Bad Godesberg (DE)
(72) Erfinder: Feser, Robert, D-45899 Gelsenkirchen (DE)
(74) Vertreter: Cohausz & Florack

(57) **Zusammenfassung**

Die Erfindung betrifft einen Transportwagen, insbesondere einen Rollbehälter, mit einem Lenkrollen (4, 6) aufweisenden Unterbau und einem Aufbau. Um den Behälter am Boden zu fixieren, sind durch ein Hebelgetriebe (17-32) ausfahrbare Stützen (14, 15) vorgesehen. Zur Betätigung des Hebelgetriebes (17-32) sind zwei miteinander zur gemeinsamen Verschwenkung in entgegengesetzter Richtung miteinander gekuppelte Handhebel (17, 18) vorgesehen, die eine Bedienungsperson von jeder Stirnseite 8,11 aus erreichen kann. Um die für das Festlegen des Behälters auf die Stützen (14, 15) auszuübende Kraft zu minimieren, ist ein auf- und entladbarer Kraftspeicher (34) am Hebelgetriebe (17-32) gekuppelt, derart, daß beim Verschwenken während des Leerhubes der Stützen (14, 15) die am Handhebel (17, 18) angreifende Kraft ausschließlich den Kraftspeicher (34) lädt, während der Kraftspeicher (34) bei aufgesetzten Stützen (14, 15) im Sinne einer Erleichterung der von der Bedienungsperson aufzuwendenden Kraft entladen wird.

## Beschreibung

Die Erfindung betrifft einen Transportwagen, insbesondere Rollbehälter, aus einem mit insbesondere lenkbaren Rollen bestückten und eine Feststellvorrichtung aufweisenden Unterbau und einem Aufbau, wobei die Feststellvorrichtung zwei über ein Hebelgetriebe ausfahrbare, den Transportwagen vom Boden abhebenden Stützen umfaßt.

Solche Transportwagen dienen z.B. zum Transport von Stückgut, wie Paketen und Briefen. Sie werden sowohl bei der Bahn als auch bei der Post als auch auf Flughäfen eingesetzt. Über eine Deichsel und Kupplung können mehrere Behälter zu einem Zug zusammengestellt und von einer Zugmaschine bewegt werden.

Solche als Rollbehälter ausgebildete Transportwagen sind in verschiedenen Ausführungen bekannt (DE 41 18 676 A1, DE-GM 90 05 179). Bei solchen in der Praxis eingesetzten Rollbehältern besteht der Unterbau aus einer hochklappbaren Bodenplatte und vier Lenkrollen und der Aufbau aus einer vorderen und einer hinteren Stirnwand und einer Seitenwand. Eine Stirnwand ist auf die Seitenwand zu faltbar. Wegen der hochklappbaren Bodenplatte und der faltbaren Stirnwand lassen sich mehrere Rollbehälter ineinanderschieben und raumsparend abstellen.

Von solchen Rollbehältern wird gefordert, daß sie beim Beladen und Entladen absolut feststehen. Mit auf die in der Regel als Lenkrollen ausgebildeten Rollen einwirkenden Bremsen läßt sich diese Standfestigkeit nicht erreichen. Dagegen läßt sich die geforderte Standfestigkeit mit ausfahrbaren Stützen erreichen, die mittels eines an der Seitenwand angeordneten, auf ein Hebelgetriebe einwirkenden Handhebels ausfahrbar sind. Durch diese Stützen wird der Rollbehälter einseitig ein wenig vom Boden abgehoben. Der Hubweg der Stützen muß vergleichsweise groß sein, damit im Fahrbetrieb der Rollbehälter mit den Stützen nicht an Unebenheiten oder Vorsprüngen des Bodens hängen bleibt. Diese Art der Feststellvorrichtung hat sich in der Praxis bewährt. Ein Nachteil eines mit einer solchen Feststellvorrichtung ausgerüsteten Rollbehälters ist allerdings, daß bei ungünstigem Aufstellungsort des Rollbehälters vor einer Wand oder in einer Ecke der auf der Außenseite der Seitenwand angeordnete Handhebel für das Verschwenken schlecht zu erreichen ist.

Der Erfindung liegt die Aufgabe zugrunde, einen Transportwagen der eingangs genannten Art bezüglich der Bedienung der Feststellvorrichtung zu verbessern.

Diese Aufgabe wird dadurch gelöst, daß das Hebelgetriebe zwei zur gemeinsamen Verschwenkung aus einer Mittellage an einer Seite des Transportwagens in entgegengesetztem Sinn zu dessen beiden Stirnseiten hin miteinander gekuppelte Handhebel aufweist.

Bei dem erfindungsgemäßen Transportwagen, insbesondere dem Rollbehälter, ist die Feststellvorrichtung von beiden Stirnseiten aus unter gleichen Bedingungen zu bedienen. Wenn von einer Stirnseite aus der eine Handhebel zur Arretierung des Transportwagens verschwenkt wird und anschließend diese Seite durch einen anderen Transportwagen zugestellt wird, kann die Feststellvorrichtung von der anderen freien Stirnseite aus bedient werden.

Die gegensinnige gemeinsame Verschwenkung der beiden Handhebel läßt sich auf einfache Art und Weise dadurch verwirklichen, daß die beiden Handhebel als zweiarmige Hebel ausgebildet sind, die über einen Querriegel auf verschiedenen Seiten der Gelenke der Handhebel angelenkt sind.

Das Hebelgetriebe ist vorzugsweise derart ausgestaltet, daß in jeder Stütze ein Hebelarm eines Kniegelenks mit einem Ende angreift, dessen anderer Hebelarm mit einem Ende am Unterbau abgestützt ist und dessen Kniegelenk an einem der Handhebel gekuppelt ist.

Um in der ausgefahrenen Stellung der Stützen diese auf einfache Art und Weise sicher zu fixieren, kann das Kniegelenk aus seiner Ruhestellung für die eingefahrene Stütze über seine gestreckte Lage hinaus in seine Betriebsstellung für die ausgefahrene Stütze bis an einem Anschlag verschwenkbar sein.

Da ein in der Praxis eingesetzter beladener Rollbehälter ein Gesamtgewicht von mehreren hundert Kilogramm haben kann, bedarf es einer erheblichen Kraft an seinem Handhebel, um den Rollbehälter auf die beiden Stützen aufzubocken. In der Praxis hat man versucht, durch eine hohe Übersetzung mit einem großen Schwenkweg die von der Bedienungsperson aufzuwendende Kraft auf ein erträgliches Maß zu reduzieren. Nach wie vor ist aber eine erhebliche Kraft notwendig. Dies gilt insbesondere dann, wenn der zur Verfügung stehende Schwenkweg, wie beim Einsatz von zwei in entgegengesetzter Richtung schwenkbaren Handhebeln nicht allzu groß ist. Hier schafft eine Ausgestaltung der Erfindung Abhilfe, die darin besteht, daß das Hebelgetriebe einen Kraftspeicher umfaßt, der beim verschwenken des Handhebels aus der Ruhelage für die eingefahrenen Stützen in die Betriebsstellung für die ausgefahrenen Stützen mindestens auf einem Teil des Verschwenkweges bis zum Aufsetzen der Stützen geladen und nach Aufsetzen der Stützen in das Hebelgetriebe zur Unterstützung der Hubkraft des Hebelgetriebes entladen wird. Bei dieser Ausgestaltung der Erfindung wird der für einen störungsfreien Fahrbetrieb notwendige Freiraum der Stützen in ihrer Ruhelage ausgenutzt, um bei Leerhub den Kraftspeicher zu laden. Die dafür notwendige Kraft also ist vergleichsweise klein. Genau diese gespeicherte Kraft wird beim Aufbocken des Transportwagens durch Entladen des Kraftspeichers genutzt, um die von der Bedienungsperson aufzuwendende Kraft zu unterstützen. Im Ergebnis wird dadurch zwar nicht die zu leistende Arbeit vermindert, wohl aber die für das Aufbocken notwendige Kraft, weshalb die Bedienungsperson den Behälter leichter als bisher anheben kann.

Nach einer weiteren Ausgestaltung der Erfindung ist der Kraftspeicher als Feder ausgebildet. Vorzugsweise ist der Kraftspeicher verschwenkbar auf dem Fahrgestell gelagert und verschwenkbar am Hebelgetriebe gekuppelt, derart, daß er beim Verschwenken über eine neutrale Lage, in der die gespeicherte Kraft ihr Maximum erreicht, hinwegbewegt wird. Die Einstellung sollte derart sein, daß die neutrale Lage beim Aufsetzen der Stützen gerade erreicht ist.

Im folgenden wird die Erfindung anhand einer ein Ausführungsbeispiel darstellenden Zeichnung näher erläutert. Im einzelnen zeigen:
- Fig. 1: einen Rollbehälter in Seitenansicht,
- Fig. 2: den Rollbehälter gemäß Fig. 1 in Seitenansicht von der zu Fig. 1 anderen Seite,
- Fig. 3: den Rollbehälter gemäß Fig. 1 in Aufsicht,
- Fig. 4: den Rollbehälter gemäß Fig. 2 mit im Detail dargestellter Feststellvorrichtung und
- Fig.5a-c: ein Detail der Feststellvorrichtung der Fig. 4 in verschiedenen Stellungen.

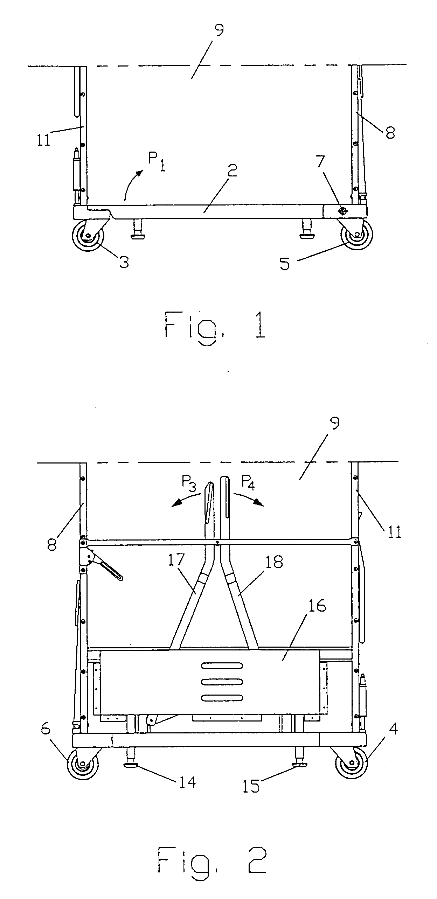

Der in den Figuren 1 bis 3 nur schematisch dargestellte, als Rollbehälter ausgebildete Transportwagen weist einen Unterbau mit einem Rahmen 1 und einer Bodenplatte 2 auf. Am Rahmen 1 sind vorne und hinten je zwei Rollen 3 bis 6, von denen mindestens die vorderen lenkbar sind, befestigt. Der als Behälter ausgebildete Aufbau besteht aus der in Pfeilrichtung P1 hochklappbaren, um ein Gelenk 7 hochschwenkbaren Bodenplatte 2, einer hinteren Stirnwand 8, einer damit winkelsteif verbundenen Seitenwand 9 und einer an der Seitenwand 9 um ein Gelenk 10 in Pfeilrichtung P2 einfaltbaren vorderen Stirnwand 11. An der hinteren Stirnwand 8 ist eine Deichsel 12 und an der vorderen Stirnwand 11 eine Kupplung 13 befestigt, so daß der Rollbehälter mit anderen gleichartigen Rollbehältern zu einem Zug zusammengestellt werden kann.

Am unteren Rand des Rahmens 1 an der Seitenwand 9 sind ausfahrbare Stützen 14, 15 vorgesehen, die über ein hinter einer Schutzverkleidung 16 angeordnetes Hebelgetriebe mittels Handhebel 17, 18 betätigt werden können. Durch Ausfahren der sich am Boden abstützenden Stützen 14, 15 kann der Rollbehälter aufgebockt werden, so daß seine Rollen 4, 6 leicht vom Boden abheben. Auf diese Art und Weise ist der Rollbehälter auf dem Boden unverrückbar fixiert.

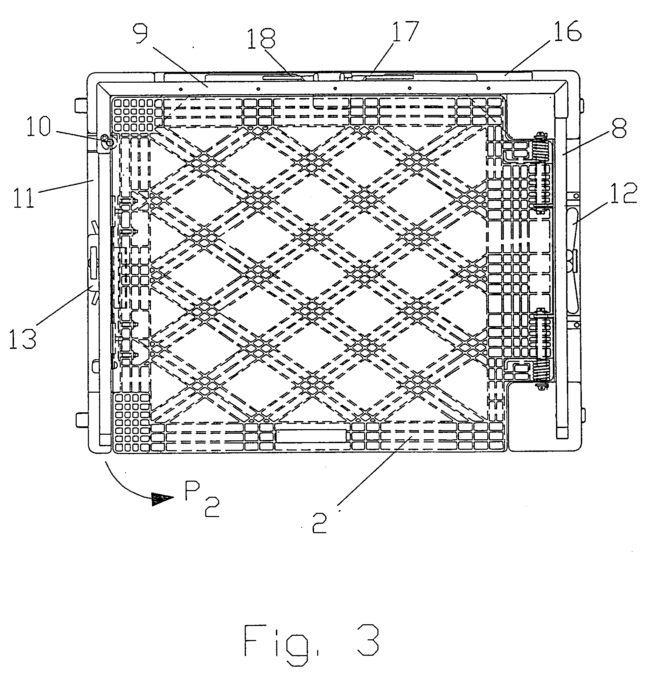

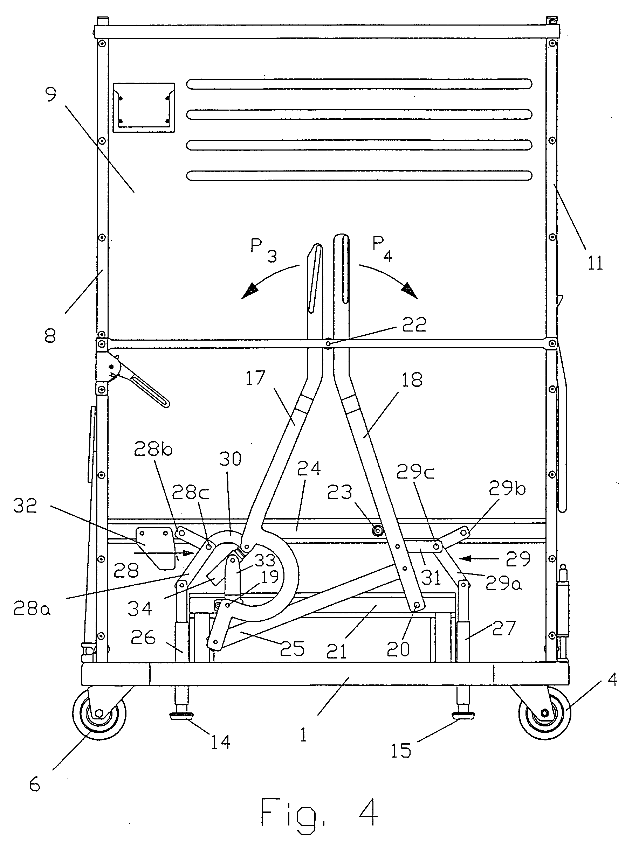

Die Handhebel 17, 18 sind um Schwenklager 19, 20 eines vom Rahmen 1 getragenen ersten Querholms 21 in entgegengesetztem Sinn entsprechend Pfeilen P3, P4 verschwenkbar. Ihre in Fig. 2 und 4 dargestellte Ruhelage in der Mitte der Seitenwand 9 wird durch Anschlagbolzen 22, 23 an einem vom Rahmen 1 getragenen zweiten Querholm 24 bestimmt. Beide Handhebel 17, 18 sind miteinander über einen Querriegel 25 verbunden, der an verschiedenen Seiten der Schwenklager 19, 20 angelenkt ist.

Die Stützen 14, 15 sind in vom Rahmen 1 getragenen Hülsen 26, 27 verschiebbar gelagert. Für das Ein- und Ausfahren der Stützen 14, 15 ist jeweils ein Kniehebel 28, 29 vorgesehen, dessen einer Hebelarm 28a, 29a mit einem Ende an der Stütze 14, 15 und deren anderer Hebelarm 28b, 29b mit einem Ende an einem festen Lagerpunkt des zweiten Querholms 24 angelenkt ist. Das Kniegelenk 28c, 29c ist über einen Schubriegel 30, 31 mit dem Handhebel 17, 18 gelenkig verbunden. Die Handhebel 17, 18 können in Pfeilrichtung P3, P4 verschwenkt werden, wobei die Kniehebel 28, 29 ihre gestreckte Lage überschreiten und das Kniegelenk 28 an einem Anschlag 32 des zweiten Querholms 24 anschlägt. Bei dieser Verschwenkbewegung setzen die Stützen 14, 15 vor Erreichen der gestreckten Lage auf und heben den Rollbehälter mit seinen Rollen 4, 6 ein wenig vom Boden ab. Da sich die Kniehebel 28, 29 dann jenseits der gestreckten Lage befinden und durch den Anschlag 32 in dieser Position fixiert sind, sind die Stützen 14, 15 arretiert und lassen sich nur durch Betätigen der Hebel 17, 18 unter Kraftaufwendung bis über die gestreckte Lage der Kniehebel 28, 29 wieder lösen.

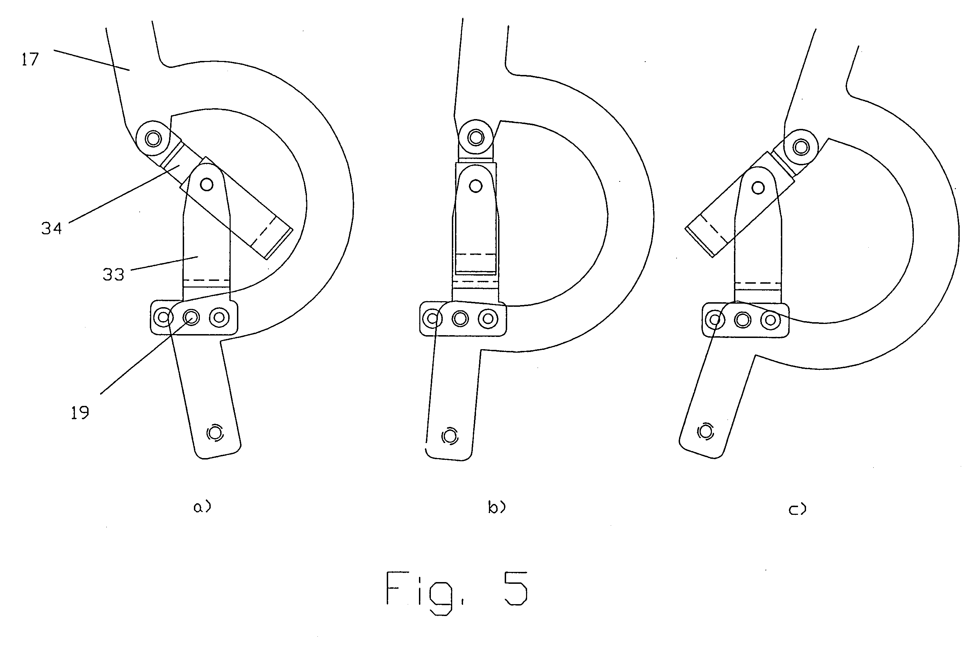

An dem Querholm 21 ist ein Lagerbock 33 für einen darauf verschwenkbar gelagerten Kraftspeicher 34 gelagert, dessen bewegliches Teil am Handhebel 17 angelenkt ist. Durch Verschwenken des Handhebels 17 in Pfeilrichtung P3 wird der Kraftspeicher 34 geladen, d.h. eine Feder gespannt, bis zu einem oberen Scheitelpunkt (Fig.5c nach Fig.5b. Diese Schwenkbewegung sollte höchstens dem Leerhub der Stützen 14, 15 bis zum Aufsetzen auf den Boden entsprechen. Deshalb braucht in diesem Schwenkbereich die Bedienungsperson nur die Kraft zum Laden des Kraftspeichers 34 aufzuwenden. Beim weiteren Verschwenken (Fig.5b nach Fig.5a), wenn mit den Stützen, 14, 15 der Rollbehälter vom Boden abgehoben wird, wird der Kraftspeicher 34 entladen und unterstützt die Schwenkbewegung, so daß die von der Bedienungsperson für das Anheben des Rollbehälters aufzubringende Kraft geringer ist als bei fehlendem Kraftspeicher 34. Umgekehrt wird beim Zurückschwenken der Kraftspeicher 34 durch die vom Gewicht des Behälters beim Absenken auf die Kniegelenke 28, 29 ausgeübte Kraft geladen, so daß die Bedienungsperson auch in dieser Phase der Betätigung der Feststellvorrichtung weniger Kraft als bei fehlendem Kraftspeicher 34 braucht.

## Patentansprüche

1. Transportwagen, insbesondere Rollbehälter, aus einem mit insbesondere lenkbaren Rollen (3-6) bestückten und eine Feststellvorrichtung (14-34) aufweisenden Unterbau und einem Aufbau (2,8,9,11), wobei die Feststellvorrichtung (14-34) ausfahrbare, über ein Hebelgetriebe (17-32) den Transportwagen vom Boden abhebende Stützen (14, 15) umfaßt, **dadurch gekennzeichnet,** daß das Hebelgetriebe (17-32) zwei zur gemeinsamen Verschwenkung aus der Mittellage an einer Seite (9) des Transportwagens in entgegengesetztem Sinne (P3, P4) zu dessen beiden Stirnseiten (8, 11) miteinander gekuppelte Handhebel (17, 18) aufweist.

2. Transportwagen nach Anspruch 1, **dadurch gekennzeichnet,** daß die beiden Handhebel (17, 18) als zweiarmige Hebel ausgebildet sind, die über einen Querriegel (25) auf verschiedenen Seiten der Gelenke (19, 20) der Handhebel (17, 18) angelenkt sind.

3. Transportwagen nach Anspruch 1 oder 2, **dadurch gekennzeichnet,** daß an jeder Stütze (14, 15) ein Hebelarm (28a, 29a) eines Kniegelenks (28, 29) mit einem Ende angreift, dessen anderer Hebelarm (28b, 29b) mit einem Ende an einem festen Lagerpunkt des Transportwagens abgestützt ist und dessen Kniegelenk (28c, 29c) an einem der Handhebel (17, 18) gekuppelt ist.

4. Transportwagen nach Anspruch 3, **dadurch gekennzeichnet,** daß das Kniegelenk (28c, 29c) aus seiner Ruhestellung für die eingefahrene Stütze (14, 15) über seine gestreckte Lage hinaus in eine Betriebsstellung für die ausgefahrene Stütze (14, 15) bis an einen Anschlag (32) verschwenkbar ist.

5. Transportwagen nach einem der Ansprüche 1 bis 4, **dadurch gekennzeichnet,** daß das Hebelgetriebe (17-32) einen Kraftspeicher (34) umfaßt, der beim Verschwenken des Handhebels (17, 18) aus der Ruhelage für die eingefahrene Stütze (14, 15) in die Betriebsstellung für die ausgefahrene Stütze (14, 15) mindestens auf einem Teil des Verschwenkwinkels bis zum Aufsetzen der Stütze (14, 15) auf dem Boden geladen und nach Aufsetzen der Stütze (14, 15) auf dem Boden in das Hebelgetriebe (17-32) zur Unterstützung der Hubkraft des Hebelgetriebes (17-32) entladen wird.

6. Transportwagen nach Anspruch 5, **dadurch gekennzeichnet,** daß der Kraftspeicher (34) eine Feder ist.

7. Transportwagen nach Anspruch 5 oder 6, **dadurch gekennzeichnet,** daß der Kraftspeicher (34) verschwenkbar auf dem Unterbau gelagert und verschwenkbar am Handhebel (17, 18) gekuppelt ist, derart, daß er beim Verschwenken über eine neutrale Lage, in der die gespeicherte Kraft ihr Maximum erreicht, hinwegbewegt wird.
